# EUROPEAN PATENT APPLICATION

(11) **EP 4 589 250 A1**
(43) Date of publication of application: **23.07.2025**
(21) Application number: 25152827.9
(22) Date of filing: 20.01.2025
(51) Int. Cl.: G01C 1/02, G01C 3/00, G01C 11/00, G01C 15/00, G06T 7/62, F41G 3/06, G01C 21/00, F41G 1/473

(54) **IMPROVEMENTS IN OR RELATING TO RANGE FINDING**

(30) Priority: 18.01.2024 GB 202400689
(71) Applicant: Thermoteknix Systems Ltd., Cambridge, Cambridgeshire CB25 9QR (GB)
(72) Inventor: Salisbury, Richard, Waterbeach, CB25 9QR (GB); Salisbury, Max, Waterbeach, CB25 9QR (GB); Hagan, Ken, Waterbeach, CB25 9QR (GB)
(74) Representative: Wilson Gunn

(57) **Abstract**

A range finding device 100 is operable to determine an estimated range R and bearing B to a target object location T11. Based on the estimated range R and expected range error ΔR, near and far offsets Δn, Δf are calculated. Based on the estimated bearing B and expected bearing error ΔB, left side and right side offsets Δl, Δr are calculated. Together the offsets define a target object location area T12. The estimated range is determined by varying the size of scale markers 202, 203 corresponding to the estimated size of the particular type of target object at the estimated range R, until the scale markers 202, 203 match the apparent size of the target object within the output image, the apparent size thereby providing an estimate of range R.

## Description

### Technical Field of the Invention

The present invention relates to range finding techniques and range finding devices. In addition, the present invention relates to processing and/or sharing of range finding information derived from range finding techniques and range finding devices.

### Background to the Invention

Range finding techniques aim to determine the distance (range) to a target object. In many instances, range finding techniques or devices are further operable to determine a direction (bearing) to the target object. This bearing might be determined by an orientation sensor, for example a digital magnetic compass (DMC), within the range finding device. Where the range and bearing to a target object is known, if the location of the ranging device is known, the location of the target object can also be calculated. In each case, whilst estimated range and estimated bearing information is very useful, it can be difficult to reliably quantify or visualise the potential uncertainty in this information.

In some instances, such as a battlefield, it is desirable to share information on range/location of target objects obtained by different ranging devices. As there can be differing levels of accuracy between different ranging devices (or indeed between more or less skilled users of ranging devices) and as target objects may move between different ranging measurements, it can be difficult to reliably determine which estimates relate to which target object or quantify the level of uncertainty in different ranging estimates. Furthermore, users of such information may find it difficult to visualise or work with such uncertainty.

Range finding techniques divide into active and passive range finding techniques. Active range finding techniques directly measure the distance to a target object, by measuring a time of flight of a sensor beam or the like. Often active range finding devices include an imaging device, such as a sight, to allow a user to aim the imaging device at the target object.

In some circumstances, passive range finding techniques are preferred. One such example would be a battlefield where use of a sensor beam may be detected by others. Passive range finding techniques typically rely on the use of an imaging device. In this context, imaging devices are operable to receive light incident on a primary aperture and generate a corresponding image at a viewing aperture. Based on knowledge of the target object and the properties of the imaging device (magnification, etc) an estimate of the range to the target object can be calculated.

One example of a passive ranging technique is stadiametric ranging. This technique is based on the principle of similar triangles. For a triangle with a given angle, the ratio of the length of the opposite side to the length of the adjacent side (tangent) is constant. Accordingly, for a target object of known size, the range to the target object can be calculated from the apparent size of the target object in the output image. Measurement of the apparent size of a target object in an image is carried out by a user judging alignment between the object and reticle marks provided on the imaging device. Relying on user judgement limits the accuracy of this technique, typically by a greater extent than other approximations in calculation. Furthermore, the accuracy of user judgement is limited by the position or nature of reticle marks. For instance, reticle marks in the centre of the field of view may be small or feint so as not to obscure key image information. Larger or more prominent reticle marks can be provided towards the edge of the field of view with less risk of obscuring key features but at a cost to the accuracy of user estimates of alignment between the reticle marks and the target object.

At their simplest, imaging devices used for passive range finding may provide magnification of the incident light via one or more mirrors/lenses. Some imaging devices may additionally provide for amplification of incident light, filtering of incident light or conversion of incident light in the infrared (IR) and/or ultraviolet (UV) wavelength ranges into the visible wavelength range.

In certain circumstances it may be desirable for such imaging devices to combine information from two or more sources to provide a composite image. An example is outlined in GB2472516A which discloses an image intensifier provided with an optical data insertion device in the form of a clip on attachment. In this example, the clip on attachment also incorporates a thermal imager. The optical data insertion device comprises a projector operable to project a visible image captured by the thermal imager and a light guiding device which directs light from the projector into the aperture of the image intensifier. In this manner light from the thermal imager and the image intensifier may be combined to provide a single image. A similar principle may be used to insert other information such as alphanumeric data into an imaging device whether projected via the primary aperture or otherwise.

It is therefore an object of the present invention to provide a range finding device, a method of range finding, a method of processing range information derived from a range finding device or range finding technique and/or a method of sharing range information derived from a range finding device or range finding technique that at least partially overcomes or alleviates some of the above issues.

### Summary of the Invention

According to a first aspect of the present invention there is provided a range finding device comprising: a range finding unit operable to determine an estimated range to a target object; an orientation sensor operable to determine an estimated bearing to a target object and a target object location area calculation unit for determining a target location area, defined by near, far and side edges, from an estimated range and bearing to a target object, the target object location area calculation unit comprising: a far and near edge calculation module operable to calculate near and far offsets from the estimated range to thereby define near and far edges of the location area; and a side edge calculation module operable to calculate radii angularly offset from the estimated bearing and having a common origin with the estimated bearing to thereby define side edges of the location area.

According to a second aspect of the present invention there is provided a method of calculating a target location area of a target object; the method comprising the steps of: determining an estimated range to a target object; determining an estimated bearing to a target object; and calculating the target location area using the estimated range and estimated bearing by calculating near and far offsets from the estimated range to thereby define near and far edges of the location area; and calculating radii angularly offset from the estimated bearing and having a common origin with the estimated bearing to thereby define side edges of the target object location area.

The first and second aspects of the present invention thereby provide for simple and reliable calculation of a target object location area from an estimated range and estimated bearing to a target object. Such a target location area can be readily visualised and understood by a user. Furthermore, such target location area information can be readily shared with other devices and readily visualised and understood by users of those devices.

The side edges may be offset from the estimated bearing by a common bearing offset value. In other embodiments, the side edges may be offset from the estimated bearing by different left bearing offset and right bearing offset values. This might accommodate situations where the uncertainty in bearing accuracy varies with direction. In some embodiments, the bearing offset values may vary with range. This might accommodate variations in estimated bearing accuracy with range.

The bearing offset values may be selected based on the expected accuracy of the estimated bearing. The estimated accuracy may be based on the estimated inherent accuracy of the orientation sensor and/or the estimated capability of the user.

The near and far edges may be offset from the estimated range by a common range offset value. In other embodiments, the near and far edges may be offset from the estimated range by different near range offset and far range offset values. In some embodiments, the range offset values may vary with range. This might accommodate variations in estimated range accuracy with range.

The range offset values may be selected based on the expected accuracy of the estimated range. The estimated accuracy may be based on the estimated inherent accuracy of the range finding device and/or the estimated capability of the user.

The near and far edges may be substantially perpendicular to the estimated bearing. The near and far edges may be arcuate. The near and far edges may be linear. In such embodiments, the target object location area essentially comprises a trapezoid. In embodiments with common side offset values, the target object location area essentially defines a regular isosceles trapezoid.

The orientation sensor may comprise a compass. In particular embodiments, the orientation sensor may comprise a digital magnetic compass. In such embodiment, the bearing may be expressed relative to magnetic north or true north as appropriate. In some embodiments, the orientation sensor may additionally or alternatively comprise an inclinometer. In such embodiments, the estimated bearing may additionally or alternatively comprise an altitude component.

The range finding device may comprise a location sensor for determining the location of the range finding device. The method may include the additional step of determining an estimated location of the range finding device. In some embodiments, the location sensor may be an inertial measurement unit. In some embodiments, the location sensor may comprise a large area location sensor such as a Global Positioning System (GPS) unit or similar.

The target object location area calculation unit may be able to determine a relative target location area defined relative to the range finding device location from the estimated range and estimated bearing. In embodiments including a location sensor, the target object location area calculation unit may be able to determine an absolute target location area from the estimated range and estimated bearing and the determined range finding device location.

In some embodiments, the range finding device may be provided with map data in addition to a location sensor. In some such embodiments, the map data may include elevation data such as Digital Terrain Elevation Data (DTED). In such embodiments, the target object location area calculation unit or the orientation sensor may be operable to calculate an altitude component of the estimated bearing. The altitude component can be calculated by using elevation data associated with the range finding device location and the target object location as determined by the estimated range and estimated bearing.

In embodiments of the range finding device provided with both map data and an inclinometer, the altitude component can be calculated using both inclinometer output and map data and then compared. This comparison can be used in assessing the accuracy of the estimated range as a whole or can be used in assessing the accuracy of the altitude component of the range and/or calculating an estimated accuracy of the altitude component of the range. In this context, a greater difference in elevation between the device and the target object can lead to greater uncertainty in the estimated location of the target object. The estimated accuracy may be based on the estimated inherent accuracy of the inclinometer and/or the estimated capability of the user.

In some embodiments, there may be more than one target object. Where there are multiple target objects, the method may include the additional step of determining an estimated range and an estimated bearing to each target object. In such embodiments, the target location area calculating unit may be operable to calculate a separate target object location area for each target object based on the estimated range and estimated bearing to each said target object.

The method may include the further step of transmitting target object data to one or more external devices. In some embodiments, the range finding device may be operable to receive data from one or more external devices. Such communications can take place via any suitable communications network. The communications network may be a wireless network. In some embodiments, the communication network is a private communication network and/or a secure communication network. The range finding device may comprise or be connected to a communication unit for connection to said communication network.

The external devices may comprise any suitable devices, including but not limited to: other range finding devices; imaging devices; display devices; target object management systems or the like.

The target object data may be transmitted or received in the form of one or more location records. A location record may be communicated on each occasion a range to a target object is measured. Alternatively, one or more locations records can be communicated periodically, on demand or in response to a detected user input. Each location record may comprise location data and meta data associated with the range measurement. The location data may include but is not limited to any one or more of: calculated target location area; estimated range; estimated bearing; measurement location, measurement time. The meta data may include but is not limited to any one or more of the following: target object identifier; target object category description; device identifier; device category description; user identifier or the like.

In some embodiments, the range finding device may be operable to display the calculated target object location area or other data. the other data may include any or all data contained in one or more received location records. In such embodiments, the range finding device may be provided with a display unit. In some such embodiments, the display unit may be a display screen. In some embodiments, the display unit may be the viewing aperture of an imaging device of the range finding device, the imaging device comprising a suitable data insertion device. In embodiments where the range finding device is provided with map data. the calculated target object location area or other data can be displayed overlaid on map data.

The range finding device may be operable to measure any one or more of: estimated range, estimated bearing, device orientation, device location or calculate a target object location area in response to detected user measurement input. To facilitate user input one or more user actuable input means may be provided.

The range finding device may be an active range finding device. Suitable examples of active range finding device include but are not limited to: laser range finders, lidar range finders, radar range finders, ultrasonic range finders, sonar range finders and the like.

The range finding device may be a passive range finding device. The range finding device may be a stadiametric range finding device. The range finding device may comprise an imaging device operable to receive light incident on a primary aperture and generate a corresponding output image at a viewing aperture. In some such embodiments, the imaging device may be provided with one or more reticle marks. This can allow a user to determine an estimated range based on the apparent size of the target object image relative to the reticle marks.

In other such embodiments, the imaging device may comprise: a user actable scale input; and a range estimation module operable to: insert a scale marker into the output image; vary the size of the scale marker within the output image in response to user actuation of the scale input; determine the size of the scale marker within the image and thereby determine an estimated range to the target object. In such embodiments, the range finding device may comprise a user actable measurement input, the range estimation module operable to output a range estimate in response to actuation of the measurement input. In suitable embodiments, the range finding device may be operable to measure any one or more of: estimated range, estimated bearing, device orientation, device location or calculate a target object location area in response to detected user measurement input.

In such embodiments, the scale marker can take any suitable form. In some embodiments, the scale marker may comprise one or more reticle marks. The scale marker may comprise a crosshair, box or partial box. The scale marker may comprise an icon. The icon may correspond to a type of target object. In such embodiments, the icon may be selected from a set of potential target objects. For instance, for a battlefield range finding systems, the icon categories may be selectable from a set including but not limited to: people, vehicles, weapons or the like. In some embodiments, more than one icon can be provided for category. For instance, there can be separate icons for a person standing or a person crouching or a front view of a vehicle and a side view of a vehicle. This can help a user assess the apparent size of the target object more accurately.

In some embodiments, the range finding device may be provided with dedicated user icon inputs for selection of a scale marker icon. In other such embodiments, the icon may be selected by use of the user scale input and/or the user measurement input. In some such embodiments, the range estimation module may be operable in an icon selection mode, in response to actuation of the user scale input to cycle through multiple scale marker icons. In such embodiments, the range estimation module may be operable in response to actuation of the scale input and/or measurement input to select the icon currently displayed and switch the device to a range measurement mode.

In some embodiments, the scale marker may comprise a combination of two or more marker elements. The marker elements may be of the same type or different types. For instance, the scale marker may comprise an icon corresponding to the selected type of target object and a crosshair, box or partial box. In such an embodiment, one element of the scale marker may be provided in the centre of the field of view and the other element may be provided towards an edge of the field of view. In one such example, a crosshair, box or partial box can be provided at the centre of the field of view with say a tank icon to the side of the field of view. In another such example, an icon depicting a standing person may be provided to one side of the field of view and an icon depicting a crouching person may be provided to another side of the field of view.

The measurement input and the scale input may comprise separate dedicated input means or may be integrated into a multi-function input means. In some embodiments, the scale input may comprise a rotary switch, sliding switch, trackball, touch pad, joystick, adjacent push switches or the like. This allows a user to readily control size changes by differential actuation. For example, moving the switch in a different direction, or actuating a different area of the touch pad or different one of the adjacent push switches. The measurement input may be a push switch, touch pad or the like.

In some embodiments, the measurement input and scale input may be operable to control other device functions. In other embodiments, the device may be provided with additional user actuable inputs to control other device functions. Such other device functions include but are not limited to: controlling a device mode of operation, measuring an estimated bearing, measuring device orientation, measuring device location, calculating a target object location area, transmitting/receiving data to/from one or more external devices, outputting data on a display unit or the like.

In embodiments comprising an imaging device, a data insertion device may be provided. The data insertion device may be operable to insert a scale marker or other data into the output image. In this manner, the output image may comprise a combination of the light incident on the primary aperture and the inserted optical data. The inserted optical data may comprise data of any suitable type. Such data may include but is not limited to: alphanumeric data, icons, images, positions, directions or combinations thereof.

In some embodiments, the optical data insertion device may comprise a projector operable to project visible data into an imaging device. Such data may be projected into the primary aperture or into another point of the imaging device. In some such embodiments, the projector may be provided with a light guiding device which directs light from the projector into the primary aperture or into another point of the imaging device. In other embodiments, data may be projected into the imaging device using a beam splitter provided in the optical path between the primary aperture and the viewing aperture. In further embodiments the optical data insertion device may comprise a partially transparent screen provided between the primary aperture and the viewing aperture, the screen operable in response to control signals to selectively emit light corresponding to said additional visible data or to selectively block the passage of light corresponding to said additional visible data.

In some embodiments, the imaging device may comprise a sight. In some embodiments, the imaging device may comprise an augmented reality viewing system. In some embodiments, the imaging device may be a night vision device. In some such embodiments, the night vision device may comprise an image intensifier. In some such embodiments, the night vision device may comprise an infrared imager.

In some embodiments, the imaging device may be provided with an infrared imager, and an optical data insertion device comprising a projector operable to project a visible image corresponding to the output of the infrared imager and a light guiding device which directs light from the projector into the aperture of the imaging device. In this manner light from the infrared imager and the imaging device may be combined to provide a single image. Similarly, any additional target object data or location record data can be inserted into the imaging device by varying the projector output. Such embodiments may be used where the imaging device is a sight or an image intensifier.

In some embodiments, the imaging device may be provided with an infrared imager, and an optical data insertion device comprising a partially transparent screen provided between the primary aperture and the viewing aperture, the screen operable in response to control signals to selectively emit light corresponding to the output of the infrared imager or to selectively block the passage of light corresponding to the output of the infrared imager. In this manner light from the infrared imager and the imaging device may be combined to provide a single image. Similarly, any additional target object data or location record data can be inserted into the imaging device by varying the projector output. Such embodiments may be used where the imaging device is a sight or an image intensifier.

The imaging device may be monocular or binocular, as required or desired.

According to a third aspect of the present invention there is provided a passive range finding device comprising: an imaging device operable to receive light incident on a primary aperture and generate a corresponding output image at a viewing aperture; a user actable scale input; and a range estimation module operable to: insert a scale marker into the output image; vary the size of the scale marker within the output image in response to user actuation of the scale input; determine the size of the scale marker within the image and thereby determine an estimated range to the target object.

According to a fourth aspect of the present invention there is provided a method of operating a passive range finding device of the type comprising an imaging device operable to receive light incident on a primary aperture and generate a corresponding output image at a viewing aperture, the method comprising the steps of: inserting a scale marker into the output image; varying the size of the scale marker within the output image in response to user scale input; determining the size of the scale marker within the output image and thereby determining an estimated range to the target object.

In the above aspects of the present invention providing a scale marker that can be varied in size, especially in response to user scale input, helps a user accurately judge the apparent size of a target object more easily than with reticle marks. In particular, the scale marker can be varied in size, potentially to a single pixel dimension, whereas fixed reticle marks are necessarily spaced with a clear separation therebetween. Additionally, if the scale marker is temporary this can allow the marker to be presented more prominently and/or closer to the centre of the field of view than any permanent reticle marks without unduly obscuring key information during normal use. It can additionally or alternatively allow a simpler display of inserted data and/or less inserted light than prominent reticle marks.

The passive range finding device of the third aspect of the present invention and the method of operating a range finding device of the fourth aspect of the present invention may incorporate any or all features of the earlier aspects of the present invention, as desired or as appropriate.

The passive range finding device may comprise a user actable measurement input, the range estimation module operable to output a range estimate in response to actuation of the measurement input.

The scale marker can take any suitable form. In some embodiments, the scale marker may comprise one or more reticle marks. The scale marker may comprise a crosshair, box or partial box. The scale marker may comprise an icon. The icon may correspond to a type of target object. In such embodiments, the icon may be selected from a set of potential target objects. For instance, for a battlefield range finding systems, the icon categories may be selectable from a set including but not limited to: people, vehicles, weapons or the like. In some embodiments, more than one icon can be provided for category. For instance, there can be separate icons for a person standing or a person crouching or a front view of a vehicle and a side view of a vehicle. This can help a user assess the apparent size of the target object more accurately.

In some embodiments, the range finding device may be provided with dedicated user icon inputs for selection of a scale marker icon. In other such embodiments, the icon may be selected by use of the user scale input and/or the user measurement input. In some such embodiments, the range estimation module may be operable in an icon selection mode, in response to actuation of the user scale input to cycle through multiple scale marker icons. In such embodiments, the range estimation module may be operable in response to actuation of the scale input and/or measurement input to select the icon currently displayed and switch the device to a range measurement mode.

In some embodiments, the scale marker may comprise a combination of two or more marker elements. The marker elements may be of the same type or different types. For instance, the scale marker may comprise an icon corresponding to the selected type of target object and a crosshair, box or partial box. In such an embodiment, one element of the scale marker may be provided in the centre of the field of view and the other element may be provided towards an edge of the field of view. In one such example, a crosshair, box or partial box can be provided at the centre of the field of view with say a tank icon to the side of the field of view. In another such example, an icon depicting a standing person may be provided to one side of the field of view and an icon depicting a crouching person may be provided to another side of the field of view.

The measurement input and the scale input may comprise separate dedicated input means or may be integrated into a multi-function input means. In some embodiments, the scale input may comprise a rotary switch, sliding switch, trackball, touch pad, joystick, adjacent push switches or the like. This allows a user to readily control size changes by differential actuation. For example, moving the switch in a different direction, or actuating a different area of the touch pad or different one of the adjacent push switches. The measurement input may be a push switch, touch pad or the like.

The passive range finding device may comprise an orientation sensor. The orientation sensor may comprise a compass. In particular embodiments, the orientation sensor may comprise a digital magnetic compass. In such embodiment, the bearing may be expressed relative to magnetic north or true north as appropriate. In some embodiments, the orientation sensor may additionally or alternatively comprise an inclinometer. In such embodiments, the estimated bearing may additionally or alternatively comprise an altitude component.

The passive range finding device may comprise a location sensor for determining the location of the passive range finding device. The method may include the additional step of determining an estimated location of the passive range finding device. In some embodiments, the location sensor may be an inertial measurement unit. In some embodiments, the location sensor may comprise a large area location sensor such as a Global Positioning System (GPS) unit or similar.

In some embodiments, the range finding device may be provided with map data in addition to a location sensor. In some such embodiments, the map data may include elevation data. In such embodiments, the target object location area calculation unit or the orientation sensor may be operable to calculate an altitude component of the estimated bearing. The altitude component can be calculated by using elevation data associated with the range finding device location and the target object location as determined by the estimated range and estimated bearing.

In embodiments of the range finding device provided with both map data and an inclinometer, the altitude component can be calculated using both inclinometer output and map data and then compared. This comparison can be used in assessing the accuracy of the estimated range as a whole or can be used in assessing the accuracy of the altitude component of the range and/or calculating an estimated accuracy of the altitude component of the range. In this context, a greater difference in elevation between the device and the target object can lead to greater uncertainty in the estimated location of the target object. The estimated accuracy may be based on the estimated inherent accuracy of the inclinometer and/or the estimated capability of the user.

The passive range finding device may be operable to measure any one or more of: estimated range, estimated bearing, device orientation, device location or calculate a target object location area in response to detected user measurement input. In some embodiments, the measurement input and scale input may be operable to control other device functions. In other embodiments, the device may be provided with additional user actuable inputs to control other device functions. Such other device functions include but are not limited to: controlling a device mode of operation, measuring an estimated bearing, measuring device orientation, measuring device location, calculating a target object location area, transmitting/receiving data to/from one or more external devices, outputting data on a display unit or the like.

In some embodiments, a data insertion device may be provided to inset the scale marker or other data into the output image. In this manner, the output image may comprise a combination of the light incident on the primary aperture and the inserted optical data. The inserted optical data may comprise data of any suitable type. Such data may include but is not limited to: alphanumeric data, icons, images, positions, directions or combinations thereof.

In some embodiments, the optical data insertion device may comprise a projector operable to project visible data into an imaging device. Such data may be projected into the primary aperture or into another point of the imaging device. In some such embodiments, the projector may be provided with a light guiding device which directs light from the projector into the primary aperture or into another point of the imaging device. In other embodiments, data may be projected into the imaging device using a beam splitter provided in the optical path between the primary aperture and the viewing aperture. In further embodiments the optical data insertion device may comprise a partially transparent screen provided between the primary aperture and the viewing aperture, the screen operable in response to control signals to selectively emit light corresponding to said additional visible data or to selectively block the passage of light corresponding to said additional visible data.

In some embodiments, the imaging device may comprise a sight. In some embodiments, the imaging device may comprise an augmented reality viewing system. In some embodiments, the imaging device may comprise a night vision device. In some such embodiments, the imaging device may comprise an image intensifier. In some such embodiments, the imaging device may comprise an infrared imager.

In some embodiments, the imaging device may be provided with an infrared imager, and an optical data insertion device comprising a projector operable to project a visible image corresponding to the output of the infrared imager and a light guiding device which directs light from the projector into the primary aperture of the imaging device. In this manner light from the infrared imager and the imaging device may be combined to provide a single image. Similarly, any additional target object data or location record data can be inserted into the imaging device by varying the projector output. Such embodiments may be used where the imaging device is a sight or an image intensifier.

In some embodiments, the imaging device may be provided with an infrared imager, and an optical data insertion device comprising a partially transparent screen provided between the primary aperture and the viewing aperture, the screen operable in response to control signals to selectively emit light corresponding to the output of the infrared imager or to selectively block the passage of light corresponding to the output of the infrared imager. In this manner light from the infrared imager and the imaging device may be combined to provide a single image. Similarly, any additional target object data or location record data can be inserted into the imaging device by varying the projector output. Such embodiments may be used where the imaging device is a sight or an image intensifier.

The imaging device may be monocular or binocular, as required or desired.

The passive range finding device may comprise a target object location area calculation unit for determining a target location area, defined by near, far and side edges, from an estimated range and bearing to a target object, the target object location area calculation unit comprising: a far and near edge calculation module operable to calculate near and far offsets from the estimated range to thereby define near and far edges of the location area; and a side edge calculation module operable to calculate radii angularly offset from the estimated bearing and having a common origin with the estimated bearing to thereby define side edges of the location area.

The side edges may be offset from the estimated bearing by a common bearing offset value. In other embodiments, the side edges may be offset from the estimated bearing by different left bearing offset and right bearing offset values. This might accommodate situations where the uncertainty in bearing accuracy varies with direction. In some embodiments, the bearing offset values may vary with range. This might accommodate variations in estimated bearing accuracy with range.

The bearing offset values may be selected based on the expected accuracy of the estimated bearing. The estimated accuracy may be based on the estimated inherent accuracy of the orientation sensor and/or the estimated capability of the user.

The near and far edges may be offset from the estimated range by a common range offset value. In other embodiments, the near and far edges may be offset from the estimated range by different near range offset and far range offset values. In some embodiments, the range offset values may vary with range. This might accommodate variations in estimated range accuracy with range.

The range offset values may be selected based on the expected accuracy of the estimated range. The estimated accuracy may be based on the estimated inherent accuracy of the range finding device and/or the estimated capability of the user. In some embodiments, the estimated accuracy may be based on difference in range between successive scale marker icon sizes.

The near and far edges may be substantially perpendicular to the estimated bearing. The near and far edges may be arcuate. The near and far edges may be linear. In such embodiments, the target object location area essentially comprises a trapezoid. In embodiments with common side offset values, the target object location area essentially defines a regular isosceles trapezoid.

According to a fifth aspect of the present invention, there is provided a target object management system comprising: a storage module operable to store target object registers for one or more existing target objects in a target object database, each said target object register containing one or more location records, each location record comprising location data of the target object; a collection module operable to receive location records relating to one or more target objects from one or more linked devices; and a processing unit operable to process received location records to determine whether they relate to an existing target object or to a new target object; wherein if a received location record relates to an existing target object, the processing unit is operable to add the received location record as a new location record on the target object register of the existing target object stored in the storage module; and wherein if a received location record relates to a new target object, the processing unit is operable to add the location record as a new location record on a new target object register stored in the storage module.

According to a sixth aspect of the present invention, there is provided a method of operating a target object management system, the method comprising the steps of: storing target object registers for one or more existing target objects in a target object database, each said target object register containing one or more location records, each location record comprising location data of the target object; receiving location records relating to one or more target objects from one or more linked devices; processing received location records to determine whether they relate to an existing target object or to a new target object; wherein if a received location record relates to an existing target object, the processing unit is operable to add the received location record as a new location record on the target object register of the existing target object; and wherein if a received location record relates to a new target object, the processing unit is operable to add the location record as a new location record on a new target object register.

The system and method of the above aspects of the present invention provide for ready storage of object location data for multiple target objects. Processing received location data enables the update of location data for existing target objects. This allows ready access to current and historic object location data or location data for a particular target object. It also simplifies stored data by eliminating duplicate records.

The system of the fifth aspect of the present invention and the method of the sixth aspect of the present invention may be used with and/or incorporate any features of the earlier aspects of the present invention, as desired or as appropriate.

The system may additionally comprise a distribution module operable to output location records or target object registers to one or more linked devices. The distribution module may be operable to output such data as it is generated, on a periodic schedule or in response to a demand received from a linked device. Outputting location records as they are generated allows each device to be updated as and when any new location records are generated. Outputting location records on a schedule or only on demand from the receiving device can help manage bandwidth and/or simplify operation.

Location records may be received via a communication network and/or location records or target object registers may be output via a suitable communication network. The communications network may be a wireless network. In some embodiments, the communication network is a private communication network and/or a secure communication network. The collection module and the distribution module may each be connected to a communication unit operable to connect to the communication network. Each linked device may comprise or be connected to a communication unit for connection to said communication network.

Location data may be received from any suitable device. Suitable devices include but are not limited to: range finding devices; imaging devices; display devices; or the like. Target object registers or location records may be output to any suitable device. Suitable devices include but are not limited to: range finding devices; imaging devices; display devices; or the like.

In some embodiments, a new location record is created on each occasion the location of a target object is measured. Location records may be created by any suitable linked device. Suitable linked devices may include range finding devices, target object location area calculation unit or other devices communication with or incorporating such devices.

Suitable range finding devices include but are not limited to active range finding devices and or passive range finding devices. Suitable examples of passive range finding devices include but are not limited to devices according to the third aspect of the present invention or operating according to the method of the fourth aspect of the present invention.

A location record may be communicated on each occasion a range to a target object is measured. Alternatively, one or more locations records can be communicated periodically, on demand or in response to a detected user input.

Each location record may comprise location data and meta data associated with the measurement. The meta data may include but is not limited to any one or more of the following: target object identifier; target object category description; device identifier; device category description; user identifier or the like. In such embodiments, processing of the meta data may be used to determine whether the received location record relates to an existing target object or to a new target object. In addition to helping to ensure that location records are added to the correct target object register, this can help assess the potential reliability of each target location in terms of accuracy and/or recency.

The location data may include but is not limited to any one or more of: calculated target location area; estimated range; estimated bearing; measurement location, measurement time. In particular embodiments, the location data in each location record may comprise a measured location of the target object. The measured location may comprise an absolute target object location. The measured location may comprise a target object location relative to a range finding device location. Similarly, the location data in each location record may comprise a target object location area calculated from the measured location. The target object location area may be calculated by a calculating method according to the second aspect of the present invention.

In some embodiments, the target object management system may comprise a target object location area calculation unit. In other embodiments the target object management system may be in communication with a target object location area calculation unit. The target object location area calculating unit may be a target object location area calculating unit according to the first aspect of the present invention.

In such embodiments, location records may comprise the measured location of the target object rather than a target object location area calculated from the measured location.

Target object registers and/or location records may be output to a control interface. The control interface may be integral to or in communication with the target object management system. The control interface may comprise a control display unit operable to display target object register details or location record details overlaid on a map. Similarly, some linked devices may comprise a local display unit (integral to or connected to the liked device) operable to display target object register details or location record details overlaid on a map. In some embodiments, the display unit may be a display screen. In some embodiments, the display unit may be the viewing aperture of an imaging device having a suitable data insertion device.

Each display unit may be operable to display details of all target object registers or only selected target object registers. This can allow the filtering of displayed details to only those relating to target objects of specific interest. This may be of benefit where a user wishes to monitor the location of a limited number of target objects.

Each display unit may be operable to display details of all location records of selected target object registers or only selected location records of the selected target object registers. This can allow the filtering of displayed details to only those relating to location records of specific interest. This may be of benefit where a user wishes to monitor the recent location of a target object or the location as measured by particular devices.

Each display unit may be operable to display all details of selected location records or may be operable to display only selected details of selected locations records. This can allow the filtering of displayed details to only those relevant to particular analysis. In particular, it may be of benefit where a user wishes to see only location data rather than location data and meta data.

### Detailed Description of the Invention

In order that the invention may be more clearly understood one or more embodiments thereof will now be described, by way of example only, with reference to the accompanying drawings, of which:
- Figure 1: contains schematic illustrations of (a) a battlefield containing two target objects, (b) a prior art display of the location of the target objects; and (c) a display of target object location areas according to one aspect of the present invention;
- Figure 2: contains (a) a schematic illustration of how the target object location area may be calculated, (b) a flow diagram of method for calculating the target object location area, (c) a first variation of a calculated target object location area, and (d) a second variation of a calculated target object location area, all according to an aspect of the present invention;
- Figure 3: is (a) a schematic block diagram of a range finding device according to an aspect of the present invention, and (b) a schematic block diagram of a passive range finding device combined with an imaging device according to an aspect of the present invention;
- Figure 4: is an illustration of one embodiment of a passive range finding device combined with an imaging device according to an aspect of the present invention;
- Figure 5: is a schematic illustration of reticle marks used for passive stadiametric ranging techniques according to the prior art;
- Figures 6a-d: are schematic illustrations of output images displayed during use of a passive range finding device and method according to an aspect of the present invention;
- Figure 7: is a schematic block diagram of a system for sharing target object location data according to an aspect of the present invention;
- Figure 8: is a schematic illustration of (a) a display of target object location areas on a battlefield containing two target objects, the target object location areas derived from measurements by different users, and (b) a display of target object location areas on a battlefield containing two target objects, the target object location areas derived from measurements by a single user at different times; and
- Figure 9: is a schematic block diagram of a data structure used for sharing target object location data according to an aspect of the present invention.

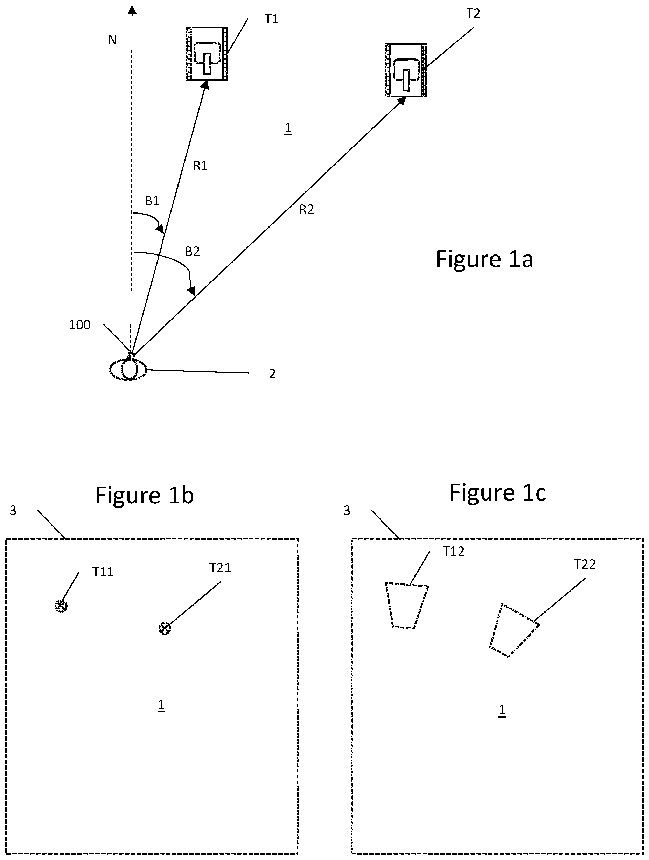

Figure 1a shows a schematic illustration of a battlefield 1 containing two target objects T1, T2 is shown. Also on the battlefield is a user 2 provided with a range finding device 100. The user 2 can use the range finding device 100 to obtain an estimated range R1, R2 to each target object T1, T2. The range finding device 100 in this example is operable to measure orientation, by way of a digital magnetic compass or otherwise, and thereby can also determine an estimated bearing B1, B2 to each target object T1, T2. As illustrated, the estimated bearings B1, B2 are defined relative to a reference direction (such as north N). From the estimated range R1, R2 and bearing B1, B2 a relative location of each target object T1, T2 can be determined. If the range finding device 100 is provided with a location sensor, it is possible to determine the location of the range finding device 100 and hence the absolute rather than relative location of the target objects T1, T2 from the estimated range R1, R2 and bearing B1, B2. The location sensor may be an inertial measurement unit or a large area location sensor such as a Global Positioning System (GPS) unit or similar.

It is possible to output the determined locations of the target objects T1, T2 on a display 3. In known systems, this might provide an output such as that shown in figure 1b. This shows the locations T11, T21 of target objects T1, T2 marked by a simple icon. Whilst this does provide an insight into the locations of target objects T1, T2 it does not take account of potential error in measuring location or give a readily understandable insight into the impact of such uncertainty. Accordingly, it can provide a user with a false confidence in the location of the target objects or can be confusing of their own measurement indicates a potentially different location for one or more target objects T1, T2.

In the present invention, as is illustrated in figure 1c, the display 3 instead shows a target object location area T12, T22 for each of target objects T1, T2. As illustrated, the target object location area T12, T22 is the form of a regular isosceles trapezium centred on the measured target object location T11, T21. The target object location area T12, T22 is calculated from the estimated range R1, R2 and bearing B1, B2 of each target object T1, T2. This makes it easy for a user to appreciate both the potential location of the target object T1, T2 and the potential uncertainty of the location.

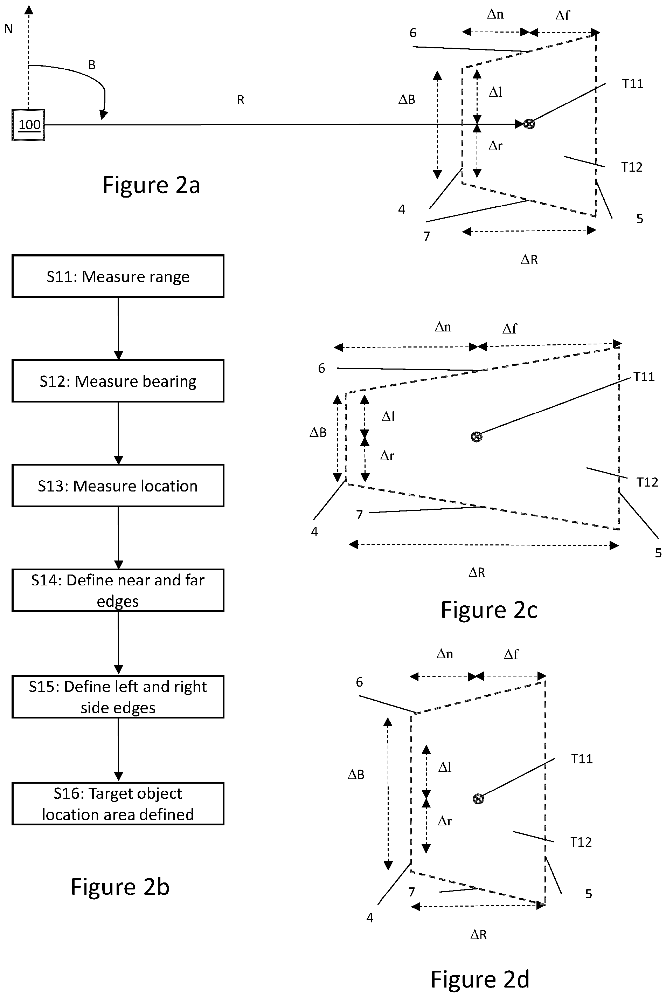

Calculation of a target object location area T12 from a target object location T11 in the present invention is illustrated schematically in figure 2a and the method is outlined in the flow chart of figure 2b. As illustrated in figure 2a, the target object location T11 is defined by a range R and bearing B from the range finding device 100. As would be expected, any measurement of range R would have an expected range error ΔR. This expected error may be derived from the expected accuracy of the range finding device 100 and the expected capability of the user. For instance, if the range finding device 100 uses stadiametric methods, the expected range error ΔR may be defined in relation to the difference in range corresponding to adjacent reticle marks. Similarly, any measurement of bearing B would have an expected bearing error ΔB. This may result from the estimated accuracy of the orientation sensor and/or the estimated capability of the user to align the range finding device 100 accurately with the target object T.

As illustrated in figure 2b, the present invention involves first measuring an estimated range R at step S11, and an estimated bearing at step S12 using the range finding device 3. As illustrated figure 2b also includes the optional step 13 of measuring the location of range finding device 100. The skilled person will appreciate that the order of steps S 11-S 13 could be varied or that each step S11-S13 could be carried out in parallel.

At S14, based on the estimated range R, the method calculates near and far offsets Δn, Δf, corresponding to the nearest and further likely locations of the target object based on the estimated range R. The near and far offsets Δn, Δf define a near edge 4 and far edge 5 respectively of the target object location area T12. As shown in figure 2, these edges 4, 5 are simple straight lines but the skilled person will appreciate that they could be replace by arcs in an alternative embodiment.

The offset values may be pre-set or may be calculated based on the range R. As illustrated in figure 2a, the offsets Δn, Δf are of equal value and summed together equal the expected range error ΔR. The skilled person will appreciate that offsets Δn, Δf of values that differ from one another may be appropriate in some cases.

At S15, based on the estimated bearing B, the method calculates left side and right side offsets Δl, Δr. The left side and right side offsets Δl, Δr define left and right edges 6, 7 of the target object location area T12. In particular, the left side and right side offsets Δl, Δr are angular offsets from the estimated bearing. As illustrated, the left side and right side offsets Δl, Δr would typically share a common origin with the estimated bearing B.

The values of left side and right side offsets Δl, Δr may be pre-set or may be calculated based on the bearing B. As illustrated in figure 2a, the offsets Δl, Δr are of equal value and summed together equal the expected bearing error ΔB. The skilled person will appreciate that offsets Δl, Δr of values that differ from one another may be appropriate in some cases.

The skilled person will appreciate that the order of steps S14, S15 could be varied or that the steps S14, S15 could be carried out in parallel.

Using the previously defined near edge 4, far edge 5 and side edges 6, 7 the target location area T12 as a whole is now defined as the area within the intersection of these edges 4-7 at step S16.

As is illustrated in figures 2c and 2d the skilled person will appreciate that near and far offsets Δn, Δf, or side offsets Δl, Δr can be varied for different devices 100, different ranges R, different target objects T or different users, as required or as desired. As one simple example, figure 2c illustrates a target object location area with increased near and far offsets Δn, Δf compared to figure 2a. This might be appropriate at a longer range or when using a less accurate range finding device 100. necessary or as appropriate. As another simple example, figure 2d illustrates a target object location area with increased side offsets Δl, Δr compared to figure 2a. This might be appropriate when using a less accurate range finding device 100.

In embodiments, omitting the location measuring step S13, the target object location area can be defined relative to the range finding device 100 only. In embodiments, including the location measuring step S13, the target object location area can be defined absolutely using the measured device location and the relative location of the target object location area.

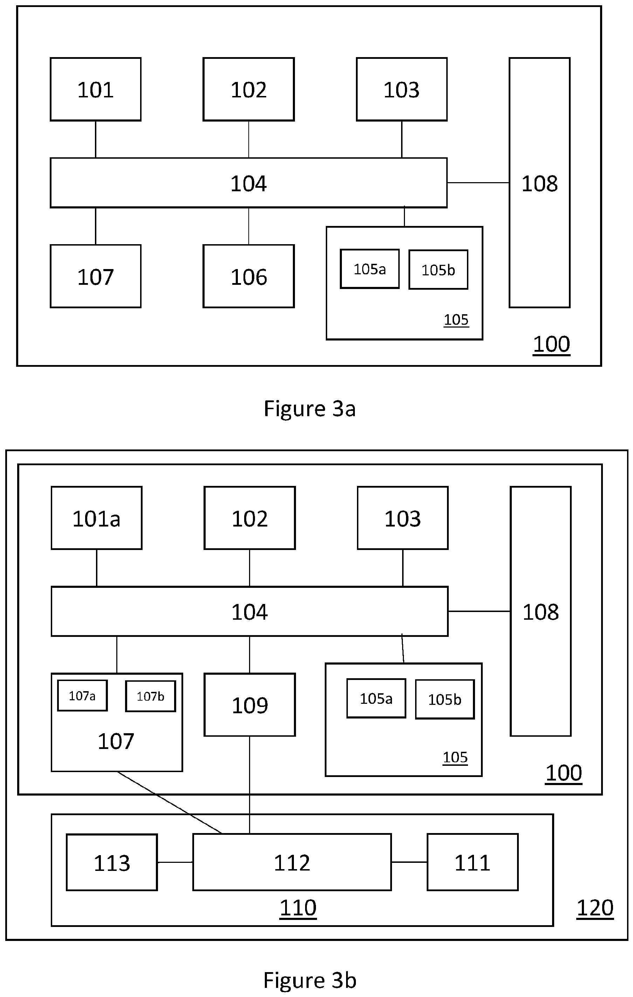

Turning now to figure 3a, a schematic block diagram of an exemplary range finding device 100 according to the present invention is shown. As illustrated, the range finding device 100 comprises a range measuring unit 101 (active or passive as appropriate), an orientation sensor 102 and a location sensor 103. Each of the measuring/sensing devices 101-103 is operable to output signals indicative of the measured/sensed quantity to a control unit 104. Similarly, measuring/sensing devices 101-103 is operable to output such signals in response to activation signals from the control unit 104.

Additionally connected to the control unit 104 is a target object location area calculation unit 105, operable to calculate a target object location area in response to an estimated range and bearing measured/sensed by the range measuring unit 101 and orientation sensor 102 using the method discussed in relation to figure 2 above. More particularly, the target object location area calculation unit 105 comprises a far and near edge calculation module 105a operable to calculate near and far offsets from the estimated range to thereby define near and far edges of the target object location area; and a side edge calculation module 105b operable to calculate radii angularly offset from the estimated bearing and having a common origin with the estimated bearing to thereby define side edges of the target object location area.

If the device 100 location is also measured by location sensor 103, the target object location area calculation unit 105 is operable to calculate an absolute target object location area.

Optionally, the range measuring device 100 may comprise a display unit 106 operable to output data related to the output of measuring/sensing devices 101-103 and/or target object location area calculation unit 105. The display unit 106 may optionally be operable to output information relating to operation or control of the range finding device 100 as a whole.

The range finding device 100 is also optionally provided with user actuable input means 107. In response to user actuation of the input means 107, the control unit 104 can activate the measuring/sensing devices 101-103 and/or the target object location area calculation unit 105 as required or as appropriate. In response to user actuation of the input means 107, the control unit 104 may control the data output on display unit 106 and/or the overall operation or control of the device 100 as a whole. The input means 107 may take any suitable form including but not limited to one or more switches, buttons, dials, joysticks, touchscreens or the like.

The range finding device 100 is further provided with a communication unit 108. This facilitates connection to a communication network allowing data from each of the measuring/sensing devices 101-103 and/or the target object location area calculation unit 105 to be transmitted to one or more external devices. Similarly, the communication unit 108 allows the device 100 to receive corresponding information from one or more external devices. Such received information may be processed by the control unit 104 and output on display unit 106, as required or as desired. Typically, the communication network operates according to a secure wireless protocol.

Turning now to figure 3b, a schematic block diagram of an alternative range finding device 120 according to the present invention is shown. In this embodiment, a range finding device 100 similar to that shown in figure 3a is integrated with an imaging device 110 to form a combined device 120. Typically, the combined device 120 would be used for passive stadiametric range finding rather than active range finding. The imaging device 110 is operable to receive light incident on a primary aperture 111 and generate a corresponding output image at a viewing aperture 113. The incident light is transformed by an imaging assembly 112 which can comprise any one or more or lenses, mirrors, filters, sensing arrays, image intensifiers, display units or the like.

Many features of the combined device 120 of figure 3b are the same or closely related to the features of the device 100 of figure 3a. Accordingly, like reference numerals have been used for these features, and description is primarily directed to any new features and any features that may operate differently in the example of figure 3b.

As compared to the device 100 of figure 3a, a key difference is the provision of an optical data insertion device 109 operable to output optical data into the imaging device so that it is visible in the output image. The optical data insertion device 109 may comprise a projector, a beam splitter, a partially transparent screen or any other suitable feature or combination of features, as required or desired. In this example, the optical data is output into the imaging assembly 112. The skilled person will appreciate that this optical data could equally be output into the primary aperture 111 or the viewing aperture 113. In this manner, the user can see data relating to any target object measurements displayed alongside an image of a target object. In particular, the user may be able to see reticle marks or similar against which they can estimate the apparent size of the target object in the output image.

Another significant change is the provision, within the input means 107 of a user actable scale input 107a and user actable measurement input 107b. these operate in conjunction with a range estimation module 101a. The scale input 107a can be a dial or other input allowing inputs to control opposing variations and is actuated by a user to select the apparent size of the of the target object in the output image. When the user has selected the correct apparent size of the target object, based on their judgment, the measurement input 107b is actuated. This then captures the apparent size of the target object as selected using the scale input 107a. This can be directly converted to an estimated range based on the properties of the imaging device 110 by the range estimation module 101a. This conversion can be by way of calculation or by way of a look up as appropriate. The skilled person will appreciate that the range estimation module 101a may optionally be operable to output a current estimated range based on the scale input to the data insertion device or elsewhere, continuously when activated.

In such embodiments, the scale input may essentially enable a user to step through successive different apparent sizes to generate range estimates. In such cases, the near and far offsets Δn, Δf can be based on the difference in range estimates that might be generated from successive size estimate steps.

Additionally, when the measurement input 107b is actuated, a measurement of the orientation of the device 120 (and hence the bearing to the target object) is captured by orientation senor 102. If the optional position sensor 103 is provided, activation of measurement input 107b triggers capture of a measurement of the location of the device 120 by location sensor 103. The control unit 104 can receive the estimated range, estimated bearing and device position as in the previous embodiment and pass this to the target object location area calculation unit 105 which is operable to calculate a target object location area, as above.

Similarly to the device 100 of figure 3a, the device 120 of figure 3b is operable to communicate with one or more external devices using communication unit 108. Any such information received using the communication unit 108 can be output via the data insertion device 109. This can allow a user to see target object data captured or calculated by other users alongside an image of the target object (or the location of the target object, if hidden) visible through the imaging device 110. Additionally or alternatively such information can be output using an optional additional display unit (not shown).

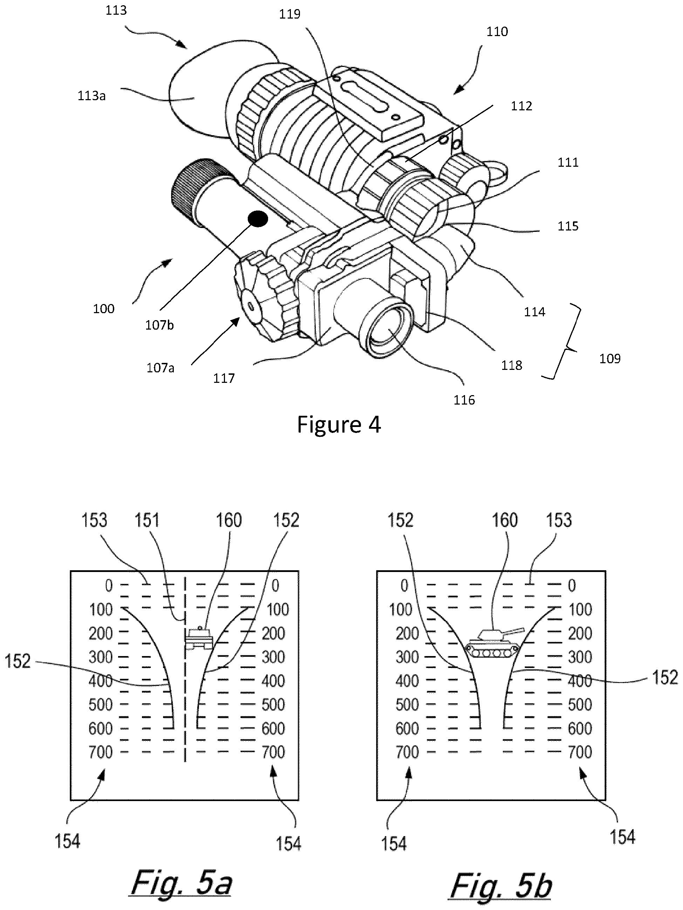

Turning to figure 4, a specific example of an imaging device 110 suitable to be combined with a range finding device 100 is shown. In this example, an optical data insertion device 109 is used to inject optical data into a primary aperture 111. Light incident on the primary aperture is transformed by an imaging assembly 112 and thereby generates a corresponding output image at a viewing aperture 113. The imaging assembly 112 can be any suitable assembly. In particular, the imaging assembly 112 can be an image intensifier or a sight. An example of such a system with an imaging assembly comprising an image intensifier is described in more detail in GB2472516A. An example of such a system with an imaging assembly comprising a sight is described in more detail in co-pending application GB2214581.7.

The optical data insertion device 109 can be secured to the image intensifier in use by any suitable means, including the bracket 119 illustrated in figure 4. The optical data insertion device 109 comprises a projector 118 operable to project a visible image including any suitable data into a light guiding device 114. The light guiding device 114 is adapted to direct light through an exit aperture 115 (not shown in figure 4) into and along the optical axis of the primary aperture 111. The light guiding device 114 is provided with an opaque housing and is constructed to be a thin as possible in order to minimise the obstruction to the primary aperture 111. Accordingly, the imaging device 110 will ultimately provide a combined image based on light from the environment incident on primary aperture 111 and light from the light guiding device 114. The combined image is output though viewing aperture 113, which may be protected by an eye guard 113a as illustrated in figure 4. In this example, the optical data insertion device 109 is further connected to a thermal imager 117 operable to capture a thermal image in response to infrared light incident on imaging aperture 116.

As described in more detail in GB2472516A, the light guiding device 114 comprises an elongate light transmitting solid body, the body tapering from a wider end to a narrower end. The wider end is adapted to provide a receiving surface for receiving incident light, typically from the projector. The narrower end is adapted to provide an exit surface for said incident light and a reflector is provided adjacent to the narrower end, the reflector adapted to receive said incident light from the exit surface and reflect said incident light through the exit aperture 115.

Additionally illustrated on figure 4 are a scale input 107a in the form of a dial and a measurement input 107b in the form of a push button.

Turning to figure 5, an illustration of known stadiametric imaging techniques within the prior art is illustrated. This technique could be carried out using device 120 of figure 3b and figure 4 or another suitable imaging device. Essentially, the output image at the viewing aperture 113 includes visible reticle marks 150 as shown in figure 5. These could be inserted using the optical data insertion device 109 or imaging assembly 112. Alternatively, they could be permanently marked on the imaging assembly 112.

The reticle marks 150 comprise a vertical centre line 151 (figure 5a) and a pair of curved side lines 152 (figures 5a and 5b). The reticle marks 150 further comprise a series of horizontal range lines 153. In use, the user aligns the device 120 such that a target object 160 visible in the output image (in this example a tank) is positioned between the curved side lines. Depending on the relative orientation of the target object (front on figure 5a or side on figure 5b), the user then varies the inclination of the device 120 such that the image of the target object 160 just fits between the centre line 151 and one side line 152 (figure 5a) or between the two side lines 152 (figure 5b). The range line 153 aligned with the widest part of target object image 160 then corresponds to the estimated range to the target object. In the examples of figures 5a and 5b, the estimated range is ~275m. The user may then simply read the estimated range from the range numbers marked beside each range line 153 or use the scale input 107a and/or measurement input 107b to select an estimated range. As can be seen, in addition to being difficult to align the device 120 appropriately, it may be difficult to accurately judge the appropriate range line and hence the range estimates produced by this technique may be less reliable than desired, especially when the user is lacking skill or experience.

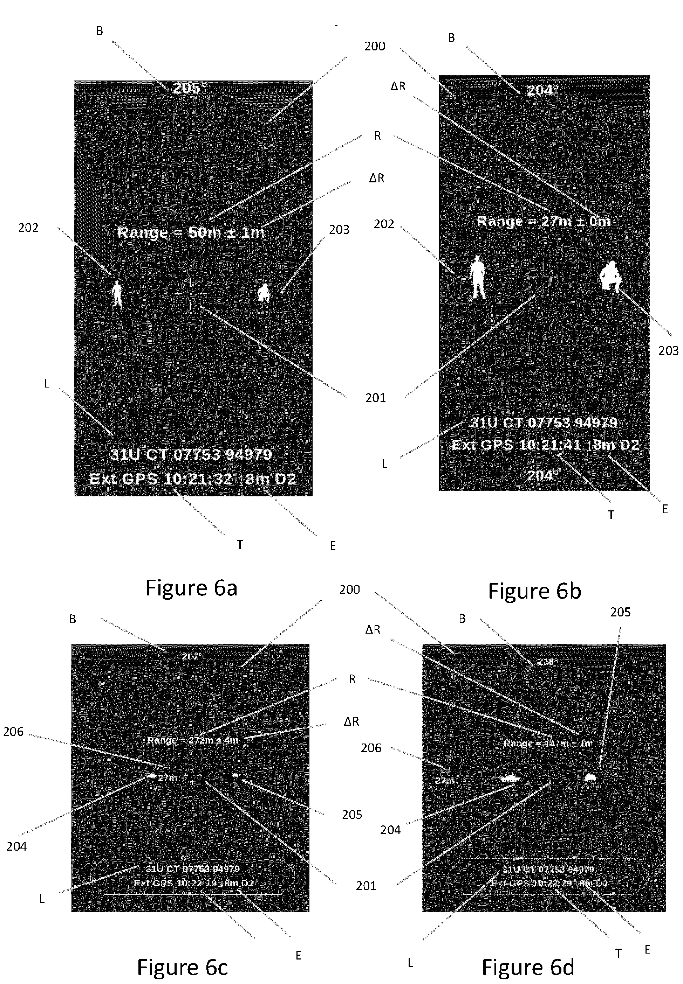

Turning now to figure 6, an improvement in stadiametric imaging implemented using a device 120 according to figure 3b or figure 4 according to another aspect of the invention is illustrated. This stadiametric imaging technique can be used in combination with the target object location area calculation described above. Nevertheless, the skilled person will also appreciate that it may be used independently of the target object location area calculation.

In this context, figure 6 illustrates examples of data 200 to be inserted into an output image by the data insertion device 109 for the purpose of generating a range estimate to a target object. The skilled person will appreciate that some or all of this data is only inserted when generating estimated range and/or bearing data. Starting with figure 5a, the inserted data 200 comprises an estimated range R (calculated by the range estimation module 101a based on the present state of the scale input 107a) and an estimated bearing B (based on the current orientation of the device 120 as measured by orientation sensor 102). As illustrated, the estimated range R may include an estimated range error ΔR. The data further comprises an estimated location L, which may be measured by the location sensor 103. Alternatively, as indicated in this example, it is measured by an external GPS unit connected to the device 120. In the illustrated example, the estimated location L includes an estimated local time and an estimated elevation (or altitude component of the range) E of the location L, which can be calculated from looking up map data associated with the location L. Additionally or alternatively, the estimated elevation E can be calculated from the output of an optional inclinometer (not shown) measuring inclination of the device 120 when aligned with the target object.

The data 200 further includes a target marker 201 indicating the centre of the field of view. Alongside the target marker 201 are provided scale markers 202,203. In this example, the scale markers 202,203 each comprise an icon being an indicative image of a particular type of target object (a person in this example). The scale markers 202, 203 each show the target object in a different figuration (standing or crouching). The scale markers 202, 203 correspond to the estimated size of the particular type of target object at the estimated range R.

The size of the scale markers 202,203 will vary according to actuation of scale input 107a. Turning to figure 5b, the user has actuated scale input 107a to increase the size of the scale markers 202,203 and as a result, the estimated range 201 has decreased to match the size of scale markers 202,203 within the image. Additionally, the orientation of the device 120 has varied, resulting in the estimated bearing B varying accordingly.

A user can actuate scale input 107a to vary the scale markers 202,203 until they match the apparent size of the target object within the output image. The user can then actuate measurement input 107b to capture the corresponding range R (27m) and bearing B (205°) for the target object. Typically, as described previously, this also results in capture of the location L. This data can be stored, communicated to an external device and/or used for calculating a target object location area as discussed previously.

In practice, the size of the marker icons 202,203 varies in steps, for instance by one or more pixels, between different output sizes. In such cases, the estimated range error ΔR can be based on the difference in range between successive marker icon 202, 203 sizes. This technique is easier to use and more accurate, even with a less skilled or experienced user, than the prior art techniques.

The skilled person will also appreciate that the estimated range error ΔR can include an estimated elevation error (or estimated altitude component of range error) ΔE. This might be based on the inherent uncertainty in the measured device location, estimated target object location and map data. In this context, a greater difference in elevation between the device and the target object can lead to greater uncertainty in the estimated location of the target object. Additionally or alternatively, it may be based on the inherent accuracy of any inclinometer and/or the resolution of the output image.

Turning now to figures 6c and 6d, a corresponding example is shown with the scale markers 204, 205 representing a tank in different orientations. In some such embodiments, the scale input 107a and measurement input 107b can be used to switch between different scale marker icons. Alternatively other inputs may be used.

As with the previous embodiment, the user actuates scale input 107a to vary the scale markers 202,203 until they match the apparent size of the target object within the output image. As the scale markers 204, 205 represent a larger object at greater range R, the estimated range error ΔR between successive scale marker 205 sizes is increased compared to the example of figures 6a and 6b.

Figures 6c and 6d also include a location marker 206 corresponding to the location of the previous target object (the person of figures 6a and 6b). As shown in figures 6c and 6d, the location marker 206 includes the estimated range to the previous target object. The location marker 206 is provided at the estimated bearing measured previously. Accordingly, the apparent position of the location marker 206 within the output image varies between figure 6c and figure 6d. In figure 6c, the estimated bearing B of 207° is relatively close to the 205° measured in figure 6b. Accordingly, the location marker 206 is relatively close to the centre of the output image. In figure 6d, the estimated bearing B of 218° is relatively further from the 205° measured in figure 6b. Accordingly, the location marker 206 is relatively further from the centre of the output image.

The skilled person will appreciate that in suitable implementations, location marker 206 may be derived from target object data received from a separate device.

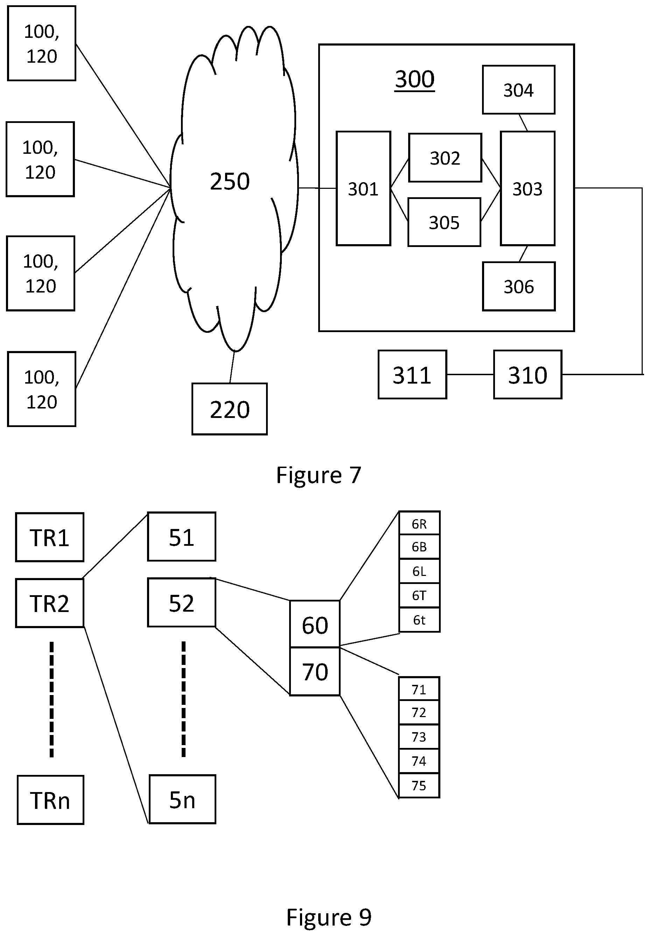

Turning now to figures 7-9, a further aspect of the invention is discussed in detail. In particular, this relates to the sharing of estimated range/bearing information or calculated target location area information (collectively target object data) obtained as described earlier in the specification or otherwise. As indicated in figure 7, a plurality of range finding devices 100, 120 are connected to a communication network 250. One or more other devices 220 may be connected to the network as well. If such devices 220 do not include range finding capability, such devices 220 may be primarily set up to receive target object information.

In this example, the sharing of target object data is coordinated by a target object management system 300 connected to the communication network 250 by a communication unit 301. A collection module 302 is connected to the communication unit 301, the collection module 302 operable to receive target object data relating to one or more target objects from one or more linked devices 100, 120. The received information can be processed by processing unit 303 and then stored in storage module 304. The storage module 304 typically comprises a database. Subsequently, the processing unit 303 may be operable to retrieve stored target object data from storage module 304 and pass this target object data to a distribution module 305 operable to output the target object data to one or more of the linked devices 100, 120. As indicated in figure 7, the processing unit 303 may also be connected to a target object location area calculation unit 306 operating according to the method described above. This enables the target object management system 300 to calculate target object location areas even if used with range measuring devices that do not have this capability.

Each of the linked range finding devices 100, 120 may be operable to transmit target object data at a suitable schedule. These transmissions might be directly following a measurement, periodically or in response to a demand issued by the target object management system via the distribution module 305. Similarly, the distribution module 305 may be operable to distribute target object data at a suitable schedule. These transmissions might also be directly following a receipt of new target object data, periodically or in response to a demand received from a linked device 100, 120, 220. In particular embodiment, the distribution module may be able to automatically share updated target object data as it is received.

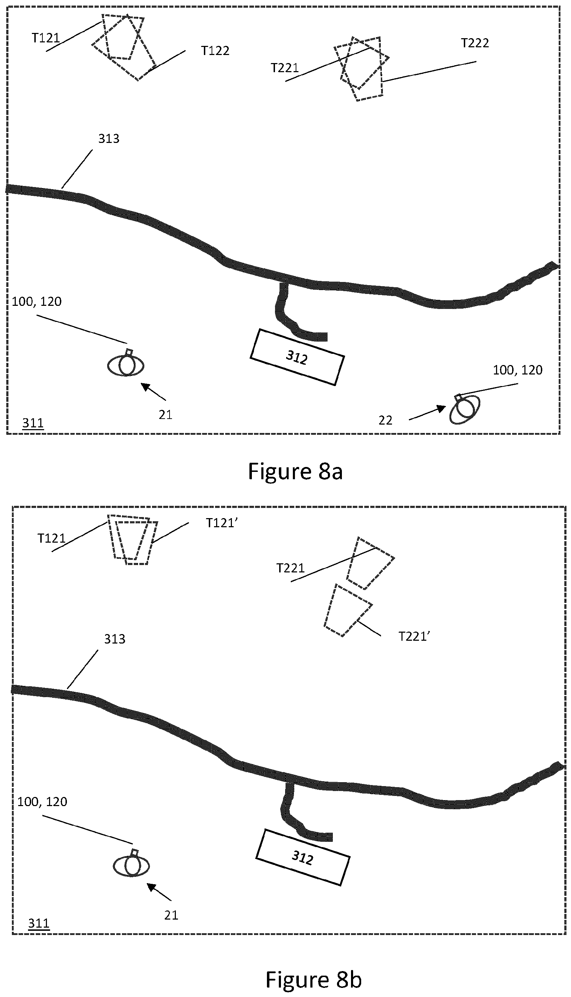

As illustrated in figure 7, a control interface 310 is optionally connected to the target object management system 300. The control interface 310 can enable an operator to view any target location data stored in the storage module. Typically, the control interface 310 might include a display unit 311 operable to output target object data overlaid on a map data. Beneficially as illustrated in figure 8, this allows target object data derived from different measurements by a single device 100, 120 or by different devices 100, 120 to be overlaid on each other. This can help an operator appreciate and interpret data received from multiple sources.

A simple example of this is shown in figure 8a where two users 21, 22 have each measured the estimated range and bearing to the same pair of target objects using range finding devices 100, 120. The estimated range, estimated bearing and measured location obtained by the first user 21 are then used to calculate a target object location area T121, T221 for each target object. Similarly, the estimated range, estimated bearing and measured location obtained by the second user 22 are then used to calculate a target object location area T122, T222 for each target object. The respective target object location areas T121, T221, T122, T222 are overlaid on map data (road 313 and building 312) before being output on display unit 311. The operator can therefore readily appreciate that the two users 21, 22 are targeting the same objects. Similarly, the operator might be able to better gauge a true location of each target object based on the overlap between respective target object location areas T121, T122 or T221, T222.

As illustrated in figure 8b, the first user 21 has made an initial measurement of each target object at a first time and a subsequent measurement some time later. The estimated range, estimated bearing and measured location obtained by the first user 21 at the first measurement are then used to calculate a target object location area T121, T221 for each target object. The estimated range, estimated bearing and measured location obtained by the first user 21 at the subsequent measurement are then used to calculate a target object location area T121', T221' for each target object. As illustrated, the target object location area T121' varies only slightly from the previous target object location area T121. Accordingly, an operator may be able to infer that that this target object has not moved significantly. In contrast, the target object location area T221' has no longer overlaps target object location area T221. Accordingly, an operator may be able to infer that that this target object has moved.

The skilled person will appreciate that any linked device 100, 120, 220 with a suitable display can output corresponding information. The skilled person will further appreciate that the appearance of such information may vary depending on the device 100, 120. In particular, the information may be in the form of a location marker 206 if the device presents such information using an optical data insertion device 109.

Turning now to figure 9, to manage the target object data received from multiple devices effectively and to enable this to be filtered and/or output, the target object management system 300 is operable to store target object data in a target object database in storage module 304 comprising a separate target object register TR1, TR2, ..., TRn for each individual target object. Each time a new measurement of a particular target object is made using one of the range finding devices 100, 120, a new location record 51, 52, ... 5n is added to the corresponding target object register TR1, TR2, ..., TRn, as illustrated in figure 9 by the expansion of TR2. Each location record 51, 52, ... 5n within a target object register such as TR2 comprises location data 60 derived from the measurement and meta data 70 associated with the measurement, as is illustrated by the expansion of location record 52. The location data 60 can comprise any one or more of estimated range 6R, estimated bearing 6B, measured location 6L, target object location area 6T, time of measurement 6t, or the like. The meta data 70 can comprise any one or more of: target object identifier 71; target object category description 72; device identifier 73; device category description 74; user identifier 75 or the like.

In operation, the processing unit 303 is operable to process received location records to determine whether it relates to an existing target object or to a new target object. In this example, this is achieved by processing the meta data. For instance, this can involve comparing the target object identifier 71 with the target object identifier 71 of existing target object registers TR1, TR2, ..., TRn. If such information is missing or inconclusive other meta data such as target object category description 72; device identifier 73; device category description 74; user identifier 75 may be alternatively used.

In the event that the processing unit 303 is able to determine that a received location record relates to an existing target object, the processing unit 303 is operable to add the received location record as a new location record Sn+1 on the target object register TR1, TR2, ..., TRn of the existing target object stored in the storage module. In the event that the processing unit 303 is able to determine that a received location record relates to a new target object, the processing unit 303 is operable to add the location record as a new location record 51 on a new target object register TRn+1 stored in the storage module 304.

Storing a separate target object register TR1, TR2, ..., TRn for each individual target object allows the system 300 to readily output location data 60 relating to a particular target object (or particular target objects) or to any particular meta data 70. This can allow the system 300 to readily output information comparing location data 60 for the target object generated by different users (such as in figure 8a) or location data 60 generated at different times (such as in figure 8b). Providing the ability to selectively output information filtered in this way can help a user or operator intuitively understand the location of multiple target objects, the certainty of that target object locations and how these target object locations may have changed over time.

In some embodiments, a device 100, 120 may be set to filter only the most recent location data 60 for display output. This can give the device user up to date information rather than overwhelming the display with old information. This may be especially convenient where the system 300 is set up to distribute updated target location data automatically. Nevertheless, old information can be accessed readily if the user wishes to track post movement of a target object and/or is concerned that a particular measurement might be anomalous.

The one or more embodiments are described above by way of example only. Many variations are possible without departing from the scope of protection afforded by the appended claims.

## Claims

1. A range finding device comprising: a range finding unit operable to determine an estimated range to a target object; an orientation sensor operable to determine an estimated bearing to a target object and a target object location area calculation unit for determining a target location area, defined by near, far and side edges, from an estimated range and bearing to a target object, the target object location area calculation unit comprising: a far and near edge calculation module operable to calculate near and far offsets from the estimated range to thereby define near and far edges of the target object location area; and a side edge calculation module operable to calculate radii angularly offset from the estimated bearing and having a common origin with the estimated bearing to thereby define side edges of the target object location area wherein the range finding device comprises an imaging device operable to receive light incident on a primary aperture and generate a corresponding output image at a viewing aperture; a user actable scale input; and a range estimation module operable to: insert a scale marker into the output image; vary the size of the scale marker within the output image in response to user actuation of the scale input; determine the size of the scale marker within the image and thereby determine an estimated range to the target object.

2. A range finding device as claimed in claim 1 wherein the side edges are offset from the estimated bearing by a common bearing offset value and wherein the near and far edges are be offset from the estimated range by a common range offset value and optionally wherein the range offset values vary with range.

3. A range finding device as claimed in any preceding claim wherein the range finding device comprises a location sensor for determining the location of the range finding device and the target object location area calculation unit is operable to determine an absolute target location area from the estimated range and estimated bearing and the determined range finding device location.

4. A range finding device as claimed in claim 3 wherein the range finding device is provided with map data including elevation data and the target object location area calculation unit or the orientation sensor is operable to calculate an altitude component of the estimated bearing.

5. A range finding device as claimed in any preceding claim wherein there is more than one target object and the target location area calculating unit is operable to calculate a separate target object location area for each target object based on the estimated range and estimated bearing to each said target object.

6. A range finding device as claimed in any preceding claim wherein the range finding device comprises a communication unit for transmitting target object data to one or more external devices and/or receiving target object data from one or more external devices.

7. A range finding device as claimed in claim 6 wherein the target object data is transmitted or received in the form of one or more location records, each location record comprising location data and meta data associated with the range measurement.

8. A range finding device as claimed in any preceding claim wherein the scale marker comprises an icon corresponding to a type of target object, optionally wherein the icon is selectable from a set of potential target objects.

9. A range finding device as claimed in any preceding claim wherein a data insertion device is provided to insert the scale marker or other data into the output image.

10. A range finding device as claimed in claim 9 wherein the imaging device comprises any one or more of: a sight; an augmented reality viewing system; a night vision device; an image intensifier; or an infrared imager.

11. A method of calculating a target location area of a target object; the method comprising the steps of: determining an estimated range to a target object; determining an estimated bearing to a target object; and calculating the target location area using the estimated range and estimated bearing by calculating near and far offsets from the estimated range to thereby define near and far edges of the target object location area; and calculating radii angularly offset from the estimated bearing and having a common origin with the estimated bearing to thereby define side edges of the target object location area wherein the range finding device comprises an imaging device operable to receive light incident on a primary aperture and generate a corresponding output image at a viewing aperture, and the method comprising the additional steps of: inserting a scale marker into the output image; varying the size of the scale marker within the output image in response to user scale input; determining the size of the scale marker within the output image and thereby determining an estimated range to the target object.

12. A method as claimed in claim 11 wherein the side edges are offset from the estimated bearing by a common bearing offset value and wherein the near and far edges are be offset from the estimated range by a common range offset value and optionally wherein the range offset values vary with range.

13. A method as claimed in claim 11 or claim 12 wherein the method includes the steps of determining the location of the range finding device and determining an absolute target location area from the estimated range and estimated bearing and the determined range finding device location and the method includes the step of calculating a separate target object location area for more than one target object based on the estimated range and estimated bearing to each said target object.

14. A method as claimed in in any one of claims 11 to 13 wherein the method includes the step of transmitting target object data to one or more external devices and/or receiving target object data from one or more external devices.

15. A method as claimed in any one of claims 11 to 14 wherein the target object data is transmitted or received in the form of one or more location records, each location record comprising location data and meta data associated with the range measurement.

16. A method as claimed in any one of claims 11 to 15 wherein the scale marker comprises an icon corresponding to a type of target object, optionally wherein the icon is selectable from a set of potential target objects.

17. A target object management comprising: a storage module operable to store target object registers for one or more existing target objects in a target object database, each said target object register containing one or more location records, each location record comprising location data of the target object; a collection module operable to receive location records relating to one or more target objects from one or more devices according to claim 7 and/or operating according to claim 15; and a processing unit operable to process received location records to determine whether they relate to an existing target object or to a new target object; wherein if a received location record relates to an existing target object, the processing unit is operable to add the received location record as a new location record on the target object register of the existing target object stored in the storage module; and wherein if a received location record relates to a new target object, the processing unit is operable to add the location record as a new location record on a new target object register stored in the storage module.

18. A method of operating a target object management system, the method comprising the steps of: storing target object registers for one or more existing target objects in a target object database, each said target object register containing one or more location records, each location record comprising location data of the target object; receiving location records relating to one or more target objects from one or more linked devices according to claim 7 and/or operating according to claim 15; processing received location records to determine whether they relate to an existing target object or to a new target object; wherein if the a received location record relates to an existing target object, the processing unit is operable to add the received location record as a new location record on the target object register of the existing target object; and wherein if a received location record relates to a new target object, the processing unit is operable to add the location record as a new location record on a new target object register.
